# EUROPEAN PATENT SPECIFICATION

(11) **EP 3 342 611 B1**
(45) Date of publication and mention of the grant of the patent: **14.12.2022**
(21) Application number: 17210703.9
(22) Date of filing: 27.12.2017
(51) Int. Cl.: B60J 7/06, B60J 7/14

(54) **REINFORCED COVER ASSEMBLY FOR TRAILER AND TRUCK BEDS**
VERSTÄRKTE ABDECKUNGSANORDNUNG FÜR ANHÄNGER UND LKW-LADEFLÄCHEN
ENSEMBLE COUVERCLE RENFORCÉ POUR REMORQUES ET PLATES-FORMES DE CAMIONS

(30) Priority: 30.12.2016 TR 201620328
(43) Date of publication of application: 04.07.2018
(73) Proprietor: Tirsan Treyler Sanayi Ve Ticaret Anonim Sirketi, 54580 Sakarya (TR)
(72) Inventor: ÇOLAKO LU, GÜLSÜM YE M, SAKARYA (TR); KELE , U UR, SAKARYA (TR); KIRAÇ, YALÇIN, SAKARYA (TR)
(74) Representative: Yamankaradeniz, Kemal

(56) References cited:
- DE-U1-202011 050 437
- US-A- 2 807 499
- US-A- 4 129 331

## Description

### TECHNICAL FIELD

This invention relates to the reinforced cover assembly which would replace the tarpaulin and steel ropes used to cover the bodies of the vehicles used for haulage.

### PREVIOUS TECHNIQUE

At the lower section of tarpaulin covers used today, there are steel ropes tensioned diagonally. These ropes are not integral parts of the tarpaulin covers, they are mounted on the carcass frame assembly by means of brackets. With the current technique, when the tarpaulin is uncovered during loading process, the steel ropes droop and take up space in the loading area. During loading conducted in such cases, the steel ropes make the loading more difficult as they get stuck on materials being loaded and take up space. In addition, the steel ropes used with the existing technique are materials with high costs and it is required to use 8 of such ropes in order to fulfill the pre-conditions of load safety regulation. This state causes increases in costs. Moreover, to prevent droop of the steel ropes during tarpaulin uncovering, wires are place between each cover support to hold these ropes. These wires cause additional material costs and cannot prevent the droop of steel ropes. With another existing technique, posts are used instead of these steel ropes and these posts are mounted on the cover frame with fabric. Thus, drooping of posts are prevented while opening covers. However, here, additional fabric is used to secure the posts.

As result of review pertaining to the previous technique, the application numbered 2011/05620 (B60J706, B60J712, E04H1500) has been found. The invention relates to the automated canvas tarp which is capable of manual and digital operation, used for opening/closing the cover on trailers, truckbeds and open space by moving forward and backward on guide way by means of the gear located under the guide protection placed on the center plates and moving on the roller connected to roller shaft and rack.

As result of review pertaining to the previous technique, another the application numbered 2014/00906 (B60J1100) has been found. This invention relates to tension buckle and hook designed to fulfill the requirements of EN 12642 XL standards with trailers with sliding tarpaulin with doors, and providing load safety and fulfilling the criteria of the standard by being applied to the side walls and back wall of the trailers with sliding tarpaulin with doors.

As result of review pertaining to the previous technique, another the application numbered 2015/-04539 (B60J706) has been found. This invention relates to a sliding roof with longitudinal elements and diagonal elements and folding plates between diagonal elements and in contact with diagonal elements, equipped with supplementary profiles running in parallel to longitudinal elements in order for folding plates and longitudinal elements to create a mechanical connection between the lower folding plates and longitudinal elements.

DE202011050437U1 and US2807499A relate to a roof skin for commercial vehicles with a vehicle structure open in the roof area comprises has a roof stiffener which is formed by at least one belt-like stiffening element.

Therefore, due to the problems stated above and inadequacy of existin solutions on the issue, it has become necessary to make improvements in the relevant technical field.

### EXPLANATION OF THE INVENTION

The primary purpose of the invention is to ensure that the loading area is used in optimally while the tarpaulin is uncovered by eliminating occupancy in the loading area and loading problems arising due to droop of steel ropes occurring when tarpaulin is uncovered during loading process.

Another important purpose of the invention is to eliminate the visual pollution created by droop of steel ropes mounted on the roof frame assembly beneath the roof tarpaulin when the tarpaulin is uncovered.

Another purpose is to perform the functions of the steel ropes and tarpaulin used at roof tarpaulin with a single structure.

Another purpose of the invention is to help reduce the costs by eliminating the need for the high cost steel ropes and the wires mounted between each support element used to prevent droop of these steel ropes.

Another purpose of the invention is to reduce the labor costs by facilitating the mounting and eliminate time loss due to mounting.

Another purpose of the invention is to increase market competitiveness by making it possible to be mounted on the existing frame without replacing the existing frame.

In order to fulfill the aforementioned purposes, the invention is a cover assembly according to claim 1, which includes;
- the reinforced cover providing protection for the materials in the vehicle body and load safety by being mounted on the said roof panel,
- the tensioning element ensuring that the said reinforced cover is tense and stands rigidly,
- the rail parts,
- the support element ensuring that the said roof panel remains stable and the said rail is supported,
- cover allowing the said roof panel to be closed, preventing external impacts from damaging the materials in the body,
- posts allowing the tensioning element to be mounted on the cover by being mounted on the said cover.

### FIGURES TO ASSIST UNDERSTANDING THE INVENTON

Figure-1; General perspective view of the cover assembly mounted on the vehicle.
Figure-2; General view of the mounted cover assembly.
Figure-3; Detailed view of the reinforced cover on cover assembly.

### PART NUMBERS

10. Cover assembly
20. Side pannel
30. Rear pannel
40. Roof pannel
41. Rail
42. Support element
43. Reinforced tarp cover
43.1. Cover
43.2. Tensioning element
43.3. Post

### DETAILED DESCRIPTION OF THE INVENTION

The invention is a cover assembly (10) which consists of side panels (20) covering the side loading areas of vehicle bodies, rear panel (30) covering the rear loading area and roof panel (40) covering the overhead loading area, and assumes the functions of tarpaulin and steel ropes used to cover the bodies of vehicles used for haulage, and it is characterized in that it incorporates; With reference to Figure-2 and Figure-3, the cover assembly (10) incorporates reinforced cover (43) to protect the materials in the vehicle body by being mounted on the said roof panel (40) and to provide load safety, and tensioning element (43.2) used for the said reinforced cover (43) to be tense and rigid.. In addition, cover assembly (10) incorporates a rail (41) allowing the cover assembly (10) to be opened/closed by being mounted on the said side panels (20), and a support element (42) to help the said roof panel (40) remain stable and support the said rail (41). With reference to Figure-3, the cover assembly (10) incorporates a tarpaulin cover (43.1) preventing damage on the materials in the body from external impacts by covering the overhead panel and post (43.3) mounted on the said cover (43.1) and allowing the tensioning element (43.2) to be mounted on the cover (43.1).

The mode of operation of the said cover assembly (10) is as follows. The cover assembly (10) used to cover the vehicle bodies consists of side panel (20), rear panel (30), roof panel (40), rail (41), support element (42), reinforced cover (43), cover (43.1), tensioning element (43.2) and posts (43.3). Roof panel (40) is mounted on side panel (20) and rear panel (30) with removable securing devices. Support elements (42) are mounted on the rail (41) with removable securing devices. Reinforced cover (43) is mounted on the assembly consisting of support elements (42) and rail (41) parts with removable securing devices. Roof panel (40) consists of reinforced cover (43), support element (42) and rail (41) parts. Tensioning element (43.2) is located on top of the cover (43.1). Posts are mounted at inner side of the assembly formed by tensioning elements (43.2) and cover, in alignment with support element (42). As the parts forming the cover assembly (10) are removable, in case the reinforced cover (43) or post (43.3) and tensioning element (43.2) forming the reinforced cover (43) or the cover (43.1) expire or are deformed due to long time operation, these parts can be removed from their mounting and can be replaced with new ones or repaired for serviceability. These actions do not hinder the mode of operation of the roof panel (40).

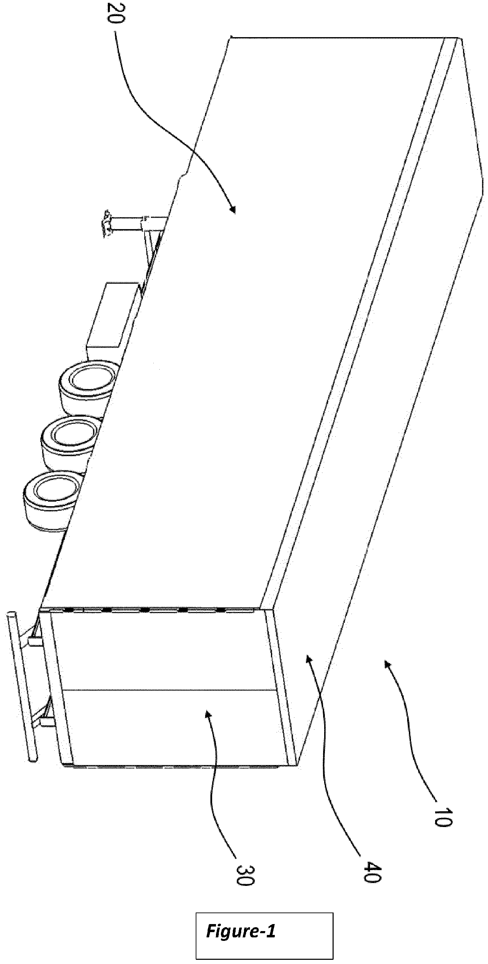

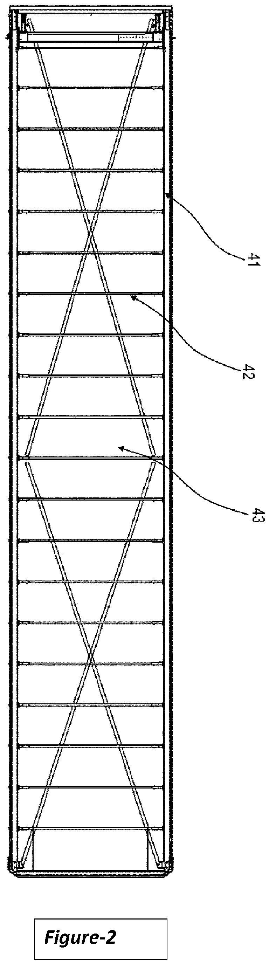

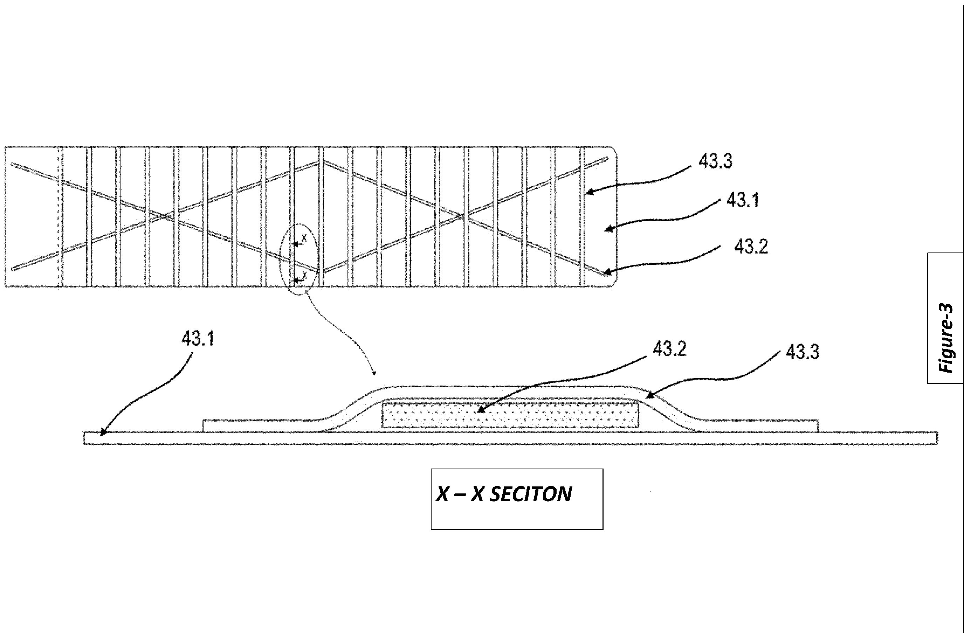

## Claims

1. A cover assembly (10) which consists of side panels (20) covering the side loading areas of vehicle bodies, a rear panel (30) covering the rear loading area and a roof panel (40) covering the overhead loading area, the roof panel (40) comprises a support element (42), rail (41) parts and a reinforced cover (43) providing protection for the materials in the vehicle body and load safety by being mounted on the said roof panel (40), at least one tensioning element (43.2) ensuring that the said reinforced cover (43) is tense and stands rigidly and assumes the functions of tarpaulin and steel ropes used to cover the bodies of vehicles used for haulage, a cover (43.1) allowing the said roof panel to be closed, preventing external impacts from damaging the materials in the body, and it is **characterized in that** it incorporates;
- a post (43.3) allowing the tensioning element (43.2) to be mounted on the cover (43.1) by being mounted on the said cover (43.1), which is mounted at inner side of the assembly formed by tensioning elements (43.2) and cover (43.1) in alignment with support element (42).

2. The cover assembly (10) in accordance with the Claim 1, and it incorporates; a rail (41) allowing the cover assembly (10) to be opened/closed by being mounted on the said side panels (20).

3. The cover assembly (10) in accordance with the Claim 2, and it incorporates; a support element (42) to keep the said roof panel (40) stable and support the said rail (41).

4. The cover assembly (10) in accordance with the Claim 1, and it incorporates; a tensioning element (43.2) in the form of the derivatives of woven or knitted fabric, belt and/or steel rope.

5. The cover assembly (10) in accordance with the Claim 1, and it incorporates; a tensioning element (43.2) able to be applied in parallel or transversally, diagonally or in different angles to longitudinal axis or roof panel (40).

6. The cover assembly (10) in accordance with the Claim 1, and it is **characterized in that**; it incorporates a tensioning element (43.2) able to be placed without any bonding process on top and/or below the said cover (43.1).

7. The cover assembly (10) in accordance with the Claim 1, and it is **characterized in that**; it incorporates a tensioning element (43.2) able to be placed on top and/or below the said cover (43.1), be connected with sewing, welding, and removable connection.

8. The cover assembly (10) in accordance with the Claim 1 and it is **characterized in that**; it incorporates a support element (42) connected with bonding by being sewn, adhered or welding or removable connection at places aligned to the tensioning elements (43.2) at the top/between/below the assembly formed by the said tensioning element (43.2) and the cover (43.1).

9. The cover assembly (10) in accordance with the Claim 1 and it is **characterized in that**; it incorporates a support element (42) connected without bonding at places aligned to the tensioning elements (43.2) at the top/between/below the assembly formed by the said tensioning element (43.2) and the cover (43.1).

## Patentansprüche

1. Abdeckungsanordnung (10), die aus Seitenwänden (20), die die seitlichen Ladeflächen von Fahrzeugaufbauten abdecken, einer Rückwand (30), die die hintere Ladefläche abdeckt, und einer Dachplatte (40), die die Überkopf-Ladefläche abdeckt, besteht, wobei die Dachplatte (40) ein Stützelement (42), Teile von Schienen (41) und eine verstärkte Abdeckung (43) umfasst, die Schutz für die Materialien in dem Fahrzeugaufbau und Ladungssicherheit bietet, indem sie auf der Dachplatte (40) montiert ist, wobei mindestens eine Spannelement (43.2) sicherstellt, dass die verstärkte Abdeckung (43) gespannt ist und starr steht und die Funktionen von Plane und Stahlseilen übernimmt, die verwendet werden, um die Aufbauten von Fahrzeugen abzudecken, die zum Transport verwendet werden, wobei eine Abdeckung (43.1) ermöglicht, dass die Dachplatte geschlossen wird, wobei verhindert wird, dass äußere Einwirkungen die Materialien in dem Aufbau beschädigen, und sie ist **dadurch gekennzeichnet, dass** sie enthält;
- eine Stütze (43.3), die es ermöglicht, dass das Spannelement (43.2) an der Abdeckung (43.1) montiert wird, indem es an der Abdeckung (43.1) montiert wird, die an der Innenseite der durch Spannelemente (43.2) und Abdeckung (43.1) in Ausrichtung mit dem Stützelement (42) gebildeten Anordnung montiert ist.

2. Abdeckungsanordnung (10) nach Anspruch 1, und sie enthält; eine Schiene (41), die das Öffnen/Schließen der Abdeckungsanordnung (10) ermöglicht, indem sie an den Seitenwänden (20) montiert ist.

3. Abdeckungsanordnung (10) nach Anspruch 2, und sie enthält; ein Stützelement (42), um die Dachplatte (40) stabil zu halten und die Schiene (41) zu stützen.

4. Abdeckungsanordnung (10) nach Anspruch 1, und sie enthält; ein Spannelement (43.2) in Form der Weiterentwicklung von Gewebe oder Gestrick, Gurt und/oder Stahlseil.

5. Abdeckungsanordnung (10) nach Anspruch 1, und sie enthält; ein Spannelement (43.2), das in der Lage ist, parallel oder quer, diagonal oder in unterschiedlichen Winkeln zur Längsachse oder Dachplatte (40) angelegt zu werden.

6. Abdeckungsanordnung (10) nach Anspruch 1, und sie ist **dadurch gekennzeichnet, dass**; sie ein Spannelement (43.2) enthält, das ohne jeglichen Bindungsprozess auf und/oder unterhalb der Abdeckung (43.1) platziert werden kann.

7. Abdeckungsanordnung (10) nach Anspruch 1, und sie ist **dadurch gekennzeichnet, dass**; sie ein Spannelement (43.2) enthält, das auf und/oder unterhalb der Abdeckung (43.1) platziert, durch Nähen, Schweißen und lösbare Verbindung verbunden werden kann.

8. Abdeckungsanordnung (10) nach Anspruch 1, und sie ist **dadurch gekennzeichnet, dass**; sie ein Stützelement (42) enthält, das an mit den Spannelementen (43.2) fluchtenden Stellen an der Oberseite/zwischen/unterhalb der durch das Spannelement (43.2) und die Abdeckung (43.1) gebildeten Anordnung mit Bindung durch Nähen, Kleben oder Schweißen oder lösbare Verbindung verbunden ist.

9. Abdeckungsanordnung (10) nach Anspruch 1, und sie ist **dadurch gekennzeichnet, dass**; sie ein Stützelement (42) enthält, das an mit den Spannelementen (43.2) fluchtenden Stellen an der Oberseite/zwischen/unterhalb der durch das Spannelement (43.2) und die Abdeckung (43.1) gebildeten Anordnung ohne Bindung verbunden ist.

## Revendications

1. Ensemble couvercle (10) qui est constitué de panneaux latéraux (20) couvrant les zones de chargement latérales de caisses de véhicules, d'un panneau arrière (30) couvrant la zone de chargement arrière et d'un panneau de toit (40) couvrant la zone de chargement supérieure, le panneau de toit (40) comprend un élément support (42), des éléments de rails (41) et un couvercle renforcé (43) assurant la protection des matériaux de la caisse du véhicule et la sécurité du chargement en étant monté sur ledit panneau de toit (40), au moins un élément tendeur (43.2) assurant que ledit couvercle renforcé (43) est tendu et se tient de manière rigide et remplit les fonctions de bâche et de câbles en acier utilisés pour couvrir les caisses des véhicules utilisés pour le transport, un couvercle (43.1) permettant la fermeture dudit panneau de toit, ce qui empêche l'endommagement par des chocs extérieurs des matériaux dans la caisse, et il est **caractérisé en ce qu'**il incorpore ;
- un montant (43.3) permettant à l'élément tendeur (43.2) d'être monté sur le couvercle (43.1) en étant monté sur ledit couvercle (43.1), qui est monté au niveau du côté intérieur de l'ensemble formé par les éléments tendeurs (43.2) et le couvercle (43.1) dans l'alignement de l'élément support (42).

2. Ensemble couvercle (10) selon la revendication 1, et il incorpore ; un rail (41) permettant l'ouverture/la fermeture de l'ensemble couvercle (10) en étant monté sur lesdits panneaux latéraux (20).

3. Ensemble couvercle (10) selon la revendication 2, et il incorpore ; un élément support (42) pour maintenir ledit panneau de toit (40) stable et supporter ledit rail (41).

4. Ensemble couvercle (10) selon la revendication 1, et il incorpore ; un élément tendeur (43.2) sous la forme de dérivés de tissu tissé ou tricoté, de ceinture et/ou de câble en acier.

5. Ensemble couvercle (10) selon la revendication 1, et il incorpore ; un élément tendeur (43.2) pouvant être appliqué parallèlement ou transversalement, en diagonale ou selon des angles différents sur l'axe longitudinal ou sur le panneau de toit (40).

6. Ensemble couvercle (10) selon la revendication 1, et il est **caractérisé en ce que** ; il incorpore un élément tendeur (43.2) pouvant être placé sans aucune opération de liaison au-dessus et/ou en-dessous dudit couvercle (43.1).

7. Ensemble couvercle (10) selon la revendication 1, et il est **caractérisé en ce que** ; il incorpore un élément tendeur (43.2) pouvant être placé au-dessus et/ou en-dessous dudit couvercle (43.1), être raccordé par couture, soudage et raccordement amovible.

8. Ensemble couvercle (10) selon la revendication 1 et il est **caractérisé en ce que** ; il incorpore un élément support (42) raccordé par liaison par couture, collage ou soudage ou raccordement amovible au niveau des endroits alignés avec les éléments tendeurs (43.2) en haut/entre/en dessous de l'ensemble formé par ledit élément tendeur (43.2) et le couvercle (43.1).

9. Ensemble couvercle (10) selon la revendication 1 et il est **caractérisé en ce que** ; il incorpore un élément support (42) raccordé sans liaison au niveau des endroits alignés avec les éléments tendeurs (43.2) en haut/entre/au dessous de l'ensemble formé par ledit élément tendeur (43.2) et le couvercle (43.1).
